# EUROPEAN PATENT APPLICATION

(11) **EP 4 793 467 A1**
(43) Date of publication of application: **19.08.2026**
(21) Application number: 26158624.2
(22) Date of filing: 13.02.2026
(51) Int. Cl.: F01D 17/02, F01D 25/16, F16C 19/16, F16C 19/26, F16C 33/38

(54) **TORQUE MEASUREMENT BASED ON BEARING CONTACT ANGLE CONTROLLED BY GEAR FORCE REACTION**

(30) Priority: 13.02.2025 US 202519052513
(71) Applicant: Pratt & Whitney Canada Corp., (01BE5) Longueuil, QC J4G 1A1 (CA)
(72) Inventor: ROZPUTYNSKI, Tomasz, (01BE5) Longueuil, J4G 1A1 (CA); PIOTROWSKI, Maciej, (01BE5) Longueuil, J4G 1A1 (CA)
(74) Representative: Dehns

(57) **Abstract**

Torque measurement systems for aircraft propulsion systems include a gear assembly (200) having a shaft (202) and a bearing assembly (212) configured to rotationally support the shaft (202) within a housing (208). The bearing assembly (212) includes an inner bearing raceway (218) arranged on the shaft (202), an outer bearing raceway (220) arranged on the housing (208), a rolling element (216) arranged between the bearing raceways (218) and configured to travel along a path defined between the bearing raceways (218), and a bearing cage (228) arranged between the bearing raceways (218). The rolling element (216) is configured drive rotational movement of the bearing cage (228). An axial load member (222) is arranged to apply an axial load to the outer bearing raceway (220), a rotational velocity sensor (232) is configured to measure a rotational velocity of the bearing cage (228), and a controller (242) is configured to calculate a transferred toque of the gear assembly (200) based on a detected rotational velocity of the bearing cage (228).

## Description

### BACKGROUND

The present invention relates to aircraft engines and associated engine shaft gear assemblies and, in particular, to torque measurements based on bearing contact angles controlled by gear force reaction.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a shaft. The shaft rotation drives a compressor to compress the air for the combustor and, as noted above, can be used to drive operations of a generator to produce electricity and/or for propulsion. Besides gas turbine engines, other types of engines of aircraft propulsion systems are available. These include, but are not limited to, electrical engines and hybrid engines. In any case, a gearbox is typically interposed between the engine or power source and a component to be powered, such as a propeller. The gearbox drives the components at a required speed and carries resulting torque and loads.

### SUMMARY

According to an aspect of the present invention, torque measurement systems of aircraft propulsion systems are provided. The torque measurement systems include a gear assembly having a shaft configured to be rotated within a housing and a bearing assembly configured to rotationally support the shaft within the housing. The bearing assembly includes an inner bearing raceway arranged on the shaft, an outer bearing raceway arranged on the housing, a rolling element arranged between the inner bearing raceway and the outer bearing raceway, wherein the rolling element is configured to travel along a path defined between the inner bearing raceway and the outer bearing raceway, and a bearing cage arranged between the inner bearing raceway and the outer bearing raceway, wherein the rolling element is configured drive rotational movement of the bearing cage. An axial load member is arranged to apply an axial load to the outer bearing raceway, a rotational velocity sensor is configured to measure a rotational velocity of the bearing cage, and a controller is configured to calculate a transferred toque of the gear assembly based on a detected rotational velocity of the bearing cage.

Optionally, and in accordance with the above, the rotational velocity sensor is one of an optical sensor, a magnetic sensor, an electromechanical sensor, an electrical sensor, or a mechanical sensor.

Optionally, and in accordance with any of the above, the rotational velocity sensor is mounted to the housing.

Optionally, and in accordance with any of the above, the housing is a first housing and the bearing assembly is a first bearing assembly the system further comprising a second housing and a second bearing assembly configured to support the shaft on the second housing at an end of the shaft opposite the first bearing assembly.

Optionally, and in accordance with any of the above, the gear assembly comprises at least two spur gears that extend radially from the shaft.

Optionally, and in accordance with any of the above, the gear assembly comprises at least two helical gears that extend radially from the shaft.

Optionally, and in accordance with any of the above, the gear assembly comprises a spur gear extending radially from the shaft and a spline arranged axially with the shaft.

Optionally, and in accordance with any of the above, the gear assembly comprises a helical gear extending radially from the shaft and a spline arranged axially with the shaft.

Optionally, and in accordance with any of the above, the gear assembly comprises at least one spur gear, and the transferred torque is calculated using the following relationships: $C = tan \left({cos}^{- 1}\left(\frac{\frac{- 2 {ω}_{cage}}{{{ω}_{shaft}}^{+ 1}}}{\frac{{d}_{ball}}{{PD}_{bearing}}}\right)\right)$; ${T}_{spur} = \frac{\left(C⋅\frac{{F}_{AX}}{tan \left({α}_{gear}\right)}\right) ⋅ {PD}_{gear}}{2}$ , where C is a variable that defines the proportional relationship between the rotational speed of the bearing cage and the shaft, the bearing pitch diameter, and the ball diameter, *ω_{cage}* is a rotational velocity of the bearing cage, *ω_{shaft}* is a rotational velocity of the shaft, *PD_{bearing}* is a pitch diameter of the rolling element, *d_{ball}* is a diameter of the rolling element, *PD_{gear}* is a gear pitch diameter of the at least one spur gear, *α_{gear}* is a gear pressure angle, and *F_{AX}* is an axial force of the axial load member.

Optionally, and in accordance with any of the above, the gear assembly comprises at least one helical gear, and the transferred torque is calculated using the following relationships: $C = tan \left({cos}^{- 1}\left(\frac{\frac{- 2 {ω}_{cage}}{{{ω}_{shaft}}^{+ 1}}}{\frac{{d}_{ball}}{{PD}_{bearing}}}\right)\right)$; ${T}_{helical} = \frac{\left[1+C⋅\frac{tan \left({β}_{gear}\right)}{tan \left({α}_{gear}\right)}\right] / \left(C⋅{F}_{AX}\right)}{tan \left({α}_{gear}\right)} ⋅ \frac{{PD}_{gear}}{2}$ , where C is a variable that defines the proportional relationship between the rotational speed of the bearing cage and the shaft, the bearing pitch diameter, and the ball diameter, *ω_{cage}* is a rotational velocity of the bearing cage, *ω_{shaft}* is a rotational velocity of the shaft, *PD_{bearing}* is a pitch diameter of the rolling element, *d_{ball}* is a diameter of the rolling element, *PD_{gear}* is a gear pitch diameter, *α_{gear}* is a gear pressure angle, *β_{gear}* is a gear helix angle, and *F_{AX}* is an axial force of the axial load member.

Optionally, and in accordance with any of the above, the axial load member is biased against a stop.

Optionally, and in accordance with any of the above, the axial load member is a spring.

According to another aspect of the present invention, methods for monitoring torque on a gear shaft of an aircraft propulsion system are provided. The methods include arranging a rolling element and a bearing cage between an inner bearing raceway and an outer bearing raceway, wherein the inner bearing raceway is arranged on the gear shaft and the outer bearing raceway is arranged on a housing that supports the gear shaft, applying an axial load to the outer bearing raceway with an axial load member, measuring a rotational speed of the bearing cage with a rotational velocity sensor, and calculating a transferred torque of the gear shaft based on the measured rotational speed of the bearing cage.

Optionally, and in accordance with any of the above, the gear shaft is part of a gear assembly, wherein the gear assembly includes the gear shaft that is configured to be rotated within a housing and a bearing assembly configured to rotationally support the gear shaft within the housing. The bearing assembly includes the inner bearing raceway, the outer bearing raceway, the rolling element arranged between the inner bearing raceway and the outer bearing raceway, wherein the rolling element is configured to travel along a path defined between the inner bearing raceway and the outer bearing raceway, and the bearing cage, wherein the rolling element is configured drive rotational movement of the bearing cage.

Optionally, and in accordance with any of the above, the gear assembly comprises at least one spur gear and the transferred torque is calculated using the following relationships: $C = tan \left({cos}^{- 1}\left(\frac{\frac{- 2 {ω}_{cage}}{{{ω}_{shaft}}^{+ 1}}}{\frac{{d}_{ball}}{{PD}_{bearing}}}\right)\right)$; ${T}_{spur} = \frac{\left(C⋅\frac{{F}_{AX}}{tan \left({α}_{gear}\right)}\right) ⋅ {PD}_{gear}}{2}$ , where *C* is a variable that defines the proportional relationship between the rotational speed of the bearing cage and the shaft, the bearing pitch diameter, and the ball diameter, *ω_{cage}* is a rotational velocity of the bearing cage, *ω_{shaft}* is a rotational velocity of the gear shaft, *PD_{bearing}* is a pitch diameter of the rolling element, *d_{ball}* is a diameter of the rolling element, *PD_{gear}* is a gear pitch diameter of the at least one spur gear, *α_{gear}* is a gear pressure angle, and *F_{AX}* is an axial force of the axial load member.

Optionally, and in accordance with any of the above, the gear assembly comprises at least one helical gear, and the transferred torque is calculated using the following relationships: $C = tan \left({cos}^{- 1}\left(\frac{\frac{- {ω}_{cage}}{{{ω}_{shaft}}^{+ 1}}}{\frac{{d}_{ball}}{{PD}_{bearing}}}\right)\right)$; ${T}_{helical} = \frac{\left(\frac{1}{\left[1+C⋅\frac{tan \left({β}_{gear}\right)}{tan \left({α}_{gear}\right)}\right] / \left(C⋅{F}_{AX}\right)}\right)}{tan \left({α}_{gear}\right)} ⋅ \frac{{PD}_{gear}}{2}$ , where *C* is a variable that defines the proportional relationship between the rotational speed of the bearing cage and the shaft, the bearing pitch diameter, and the ball diameter, *ω_{cage}* is a rotational velocity of the bearing cage, *ω_{shaft}* is a rotational velocity of the fear shaft, *PD_{bearing}* is a pitch diameter of the rolling element, *d_{ball}* is a diameter of the rolling element, *PD_{gear}* is a gear pitch diameter, *α_{gear}* is a gear pressure angle, *β_{gear}* is a gear helix angle, and *F_{AX}* is an axial force of the axial load member.

Optionally, and in accordance with any of the above, at least two spur gears extend radially from the gear shaft.

Optionally, and in accordance with any of the above, at least two helical gears extend radially from the gear shaft.

Optionally, and in accordance with any of the above, a spur gear extends radially from the gear shaft and a spline is arranged axially with the gear shaft.

Optionally, and in accordance with any of the above, a helical gear extends radially from the gear shaft and a spline is arranged axially with the gear shaft.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

For a more complete understanding of this invention, reference is now made to the following brief description, taken in connection with the accompanying drawings and detailed description, wherein like reference numerals represent like parts:
FIG. 1 is a schematic illustration of an aircraft engine that may incorporate embodiments of the present invention;
FIG. 2A is a schematic illustration of a portion of a spur gear assembly configured in accordance with an embodiment of the present invention;
FIG. 2B illustrates a portion of the spur gear assembly of FIG. 2A under a low torque operation;
FIG. 2C illustrates a portion of the spur gear assembly of FIG. 2A under a high torque operation;
FIG. 3 is a schematic illustration of a spur gear and spline assembly in accordance with an embodiment of the present invention;
FIG. 4A is a schematic illustration of a portion of a helical gear assembly configured in accordance with an embodiment of the present invention;
FIG. 4B illustrates a portion of the helical gear assembly of FIG. 4A under a low torque operation;
FIG. 4C illustrates a portion of the helical gear assembly of FIG. 4A under a high torque operation; and
FIG. 5 is a schematic illustration of a helical gear and spline assembly in accordance with an embodiment of the present invention.

### DETAILED DESCRIPTION

Detailed descriptions of one or more embodiments of the disclosed apparatus and/or methods are presented herein by way of exemplification and not limitation with reference to the Figures. The following invention is applicable to any type of engine or motor configuration for aircraft, including, but not limited to, gas turbine engines (e.g., turbofans, turboshafts, turboprops, turbojets, electrical drives, hybrid drives, etc.) for airplanes or other aircraft, helicopter rotor motors, and the like. The gas turbine engine described below is provided by way of example, and should not be interpreted as limiting the scope of the application or the claims in any way.

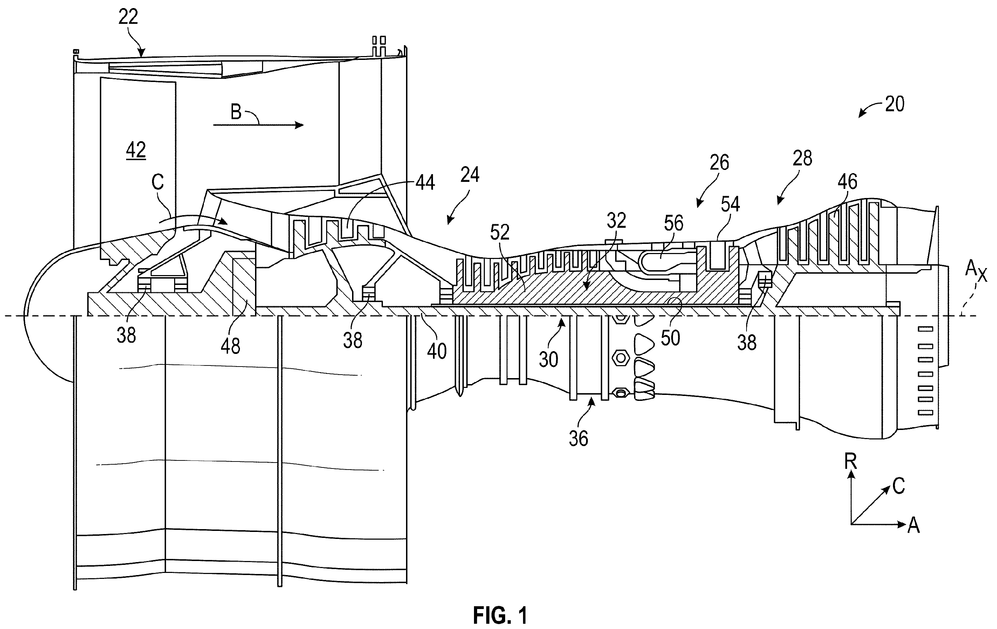

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. With reference to FIG. 1, as used herein, "aft" refers to the direction associated with the tail (e.g., the back end) of an aircraft, or generally, to the direction of exhaust of the gas turbine engine (to the right in FIG. 1). The term "forward" refers to the direction associated with the nose (e.g., the front end) of an aircraft, or generally, to the direction of flight or motion (to the left in FIG. 1). An axial direction A is along an engine central longitudinal axis Aₓ (left and right on FIG. 1). Further, radially inward refers to a negative radial direction relative to the engine axis Aₓ and radially outward refers to a positive radial direction (radial being up and down in the cross-section of the page of FIG. 1). A circumferential direction C is a direction relative to the engine axis Aₓ (e.g., a direction of rotation of components of the engine; in FIG. 1, circumferential is a direction into and out of the page, when offset from the engine axis Aₓ). An A-R-C axis is shown in the drawings to illustrate the relative position of various components.

The gas turbine engine 20, as shown, includes a low speed spool 30 and a high speed spool 32 mounted for rotation about the engine central longitudinal axis Aₓ relative to an engine static structure 36 via several bearing systems 38. It should be understood that various bearing systems 38, arranged at various locations may alternatively or additionally be provided, and the location of the bearing systems 38 may be varied as appropriate to the application and/or engine configuration.

The low speed spool 30 generally includes an inner shaft 40 that interconnects a fan 42, a low pressure compressor 44 and a low pressure turbine 46. The inner shaft 40 is connected to the fan 42 through a speed change mechanism, which in the gas turbine engine 20 is illustrated as a geared architecture or gear system 48 configured to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. An engine static structure 36 is arranged between the high pressure turbine 54 and the low pressure turbine 46. The engine static structure 36 is configured to support the bearing systems 38. The inner shaft 40 and the outer shaft 50 are concentric and rotate via bearing systems 38 about the engine central longitudinal axis Aₓ which is collinear with their longitudinal axes.

The core airflow is compressed by the low pressure compressor 44 then the high pressure compressor 52, mixed and burned with fuel in the combustor 56, then expanded over the high pressure turbine 54 and the low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and gear system 48 may be arranged in a different configuration or arrangement than that shown in FIG. 1. For example, the gear system 48 may be located aft of the combustor section 26 or even aft of the turbine section 28, and/or the fan section 22 may be positioned forward or aft of the location of the gear system 48.

The engine 20 in one non-limiting example is a high-bypass geared aircraft engine. In some such configurations and examples, the engine 20 may be configured with a bypass ratio that is greater than about six (6), with an example embodiment being greater than about ten (10). Further, the geared architecture 48 may be configured as an epicyclic gear train, such as a planetary gear system or other gear system, with a gear reduction ratio of greater than about 2.3. Such systems may include that the low pressure turbine 46 has a pressure ratio that is greater than about five (5). In one non-limiting embodiment, the engine 20 may have a bypass ratio that is greater than about ten (10:1), a fan diameter that is significantly larger than that of the low pressure compressor 44, and the low pressure turbine 46 has a pressure ratio that is greater than about five (5:1). The low pressure turbine 46 pressure ratio is pressure measured prior to inlet of low pressure turbine 46 as related to the pressure at the outlet of the low pressure turbine 46 prior to an exhaust nozzle.

The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

As noted above, the illustrative engine of FIG. 1 is merely for illustrative and explanatory purposes, and is not intended to be limiting to the scope of the present application. For example, other types of aircraft engines and/or propulsion systems that include gearing systems and/or gearboxes may implement embodiments of the present invention. In a gearbox of an aircraft engine, torque values are measured by a twisting of a torque shaft. Twisting of the torque shaft is related to the transmitted torque, the length and/or diameter(s) of the torque shaft twist area, the material properties of the shafts, and the like, as will be appreciated by those of skill in the art. Monitoring of torque on the shafts of the propulsion systems (e.g., engine, motor, etc.) may be used to monitor part life, wear and tear, fatigue, can enable identification of failures, potential failures, or the like, as will be appreciated by those of skill in the art.

In conventional torque monitoring systems, torque monitoring may require independent or dedicated systems, thus increasing the complexity, cost, and weight of the propulsion systems. A need therefore exists for improvements to the torque measurement systems that allow for precise measurement of torque while reducing the number of components and efficiency of such systems. Accordingly, in accordance with embodiments of the present invention, improved torque monitoring systems for propulsion systems are provided. The torque monitoring systems may be configured to determine a torque via monitoring a rotational speed of a rolling element cage associated with a shaft that is monitored. By monitoring the rotational speed of the rolling element cage, the torque may be calculated without the addition of conventional torque monitoring systems.

In accordance with embodiments of the present invention, torque measurement systems for aircraft propulsion shaft gearboxes are provided. The torque measuring systems may be employed with spur gear assemblies, helical gear assemblies, or other types of aircraft propulsion shaft gearboxes. In operation, for example and in accordance with a non-limiting example, a gear shaft will transfer torque through either two gear meshes or a combination of a gear mesh and a spline. It will be appreciated that single gear mesh assemblies and systems having more than two gear meshes may incorporate embodiment of the present invention for the purpose of torque measurement and monitoring. The gear meshes and/or splines may be part of or operably engaged with a shaft to drive rotation of the shaft by application of a torque. The shaft may be a gear shaft for transmitting rotational energy from one shaft to another, for output purposes (e.g., for driving rotation of a fan, etc.), for input purposes (e.g., receiving rotational energy from a turbine, etc.), or for other purposes, as will be appreciated by those of skill in the art.

The shafts may be rotational mounted on a set of bearings that support the shaft within a housing. The loaded gear mesh generates a radial force directly proportional to the transferred torque. An increase in torque leads to an increase in radial force, which alters the radial-to-axial force ratio and subsequently changes a rolling element contact angle with a bearing raceway associated with the shaft and/or a housing supporting the shaft. A decrease of the rolling element contact angle leads to the rolling element rolling over a smaller diameter. In turn, a lower running diameter results in a decrease in the circulating speed of the rolling element along the bearing raceway. As the bearing(s) rotate within the bearing raceway, the rolling elements will push a rolling element cage. As such, a lower rolling element circulating speed results in a cage rotational speed is similarly decreased. In accordance with embodiments of the present invention, by measuring a cage rotational speed, the transferred torque can be determined.

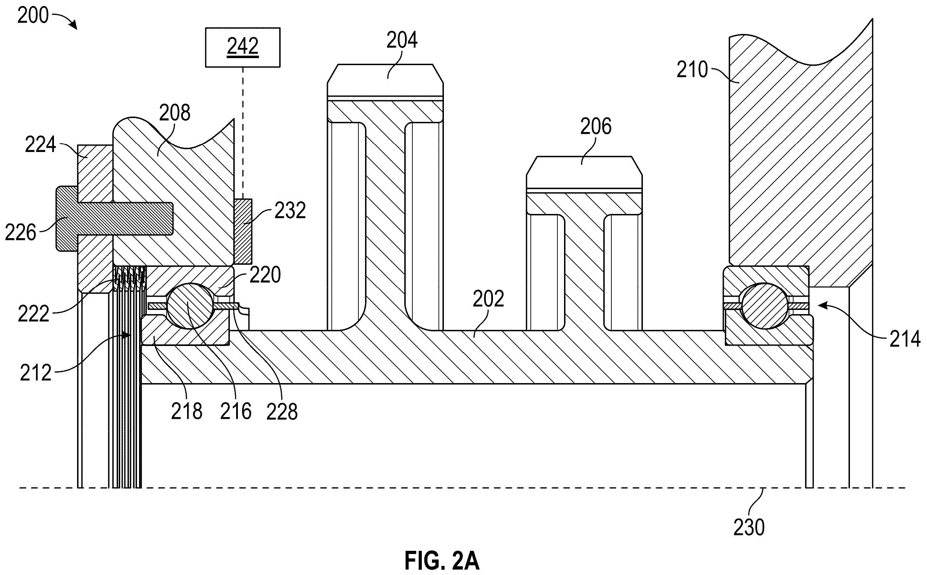

Referring now to FIGS. 2A-2C, schematic illustrations of a portion of a gear assembly 200 incorporating an embodiment of the present invention are shown. The gear assembly 200 may be part of an aircraft propulsion system or other aircraft system that includes a shaft 202 to for receiving and/or transmitting torque from or to a gear set that includes, in this illustrative configuration, a first gear 204 and a second gear 206. In this illustrated configuration, the gears 204, 206 are spur gears. The shaft 202 is rotationally mounted relative to a first housing 208 and a second housing 210. The shaft 202 is supported on a first bearing assembly 212 at one end and a second bearing assembly 214 at an opposite end of the shaft 202. It will be appreciated that other arrangements and number of bearing assemblies may be used without departing from the scope of the present invention.

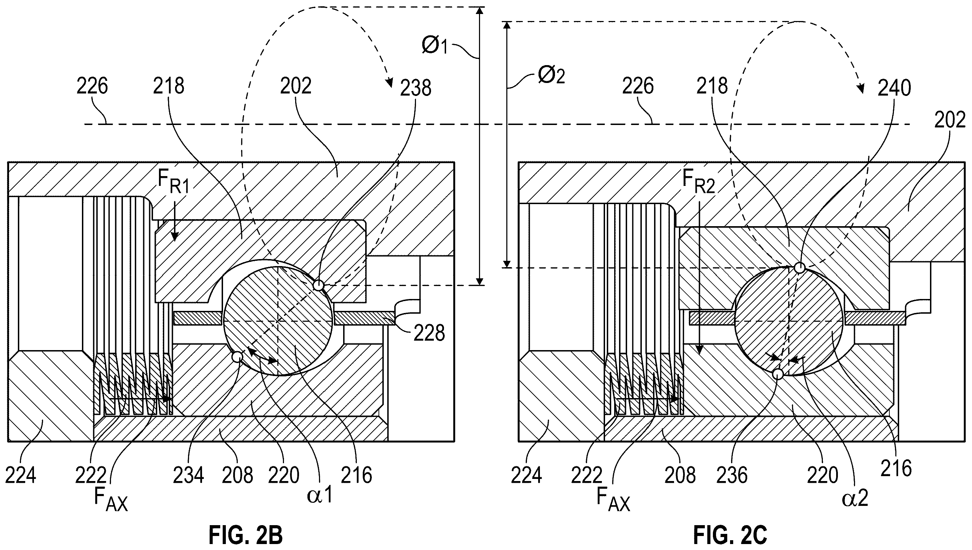

Each bearing assembly 212, 214 includes an assembly of components, which are shown with respect to the first bearing assembly 212, although the second bearing assembly may be similarly configured. The bearing assembly 212 includes a set of rolling elements 216 arranged between an inner bearing raceway 218 and an outer bearing raceway 220. In this illustrative embodiment, the rolling elements 216 are spheres or spherical. In other embodiments, the rolling elements 216 may have a different shape. For example, and without limitation, the rolling elements 216 may be cylindrical. That is, the rolling elements 216 may be ball bearings, cylindrical elements, or the like that are configured to roll or otherwise travel along the raceways 218, 220. The inner bearing raceway 218 is fixedly attached to, mounted on, or may be part of the shaft 202. The outer bearing raceway 220 is mounted on or relative to the first housing 208 and maintained under a constant and known axial load F_{AX}, which is applied via an axial load member 222 (shown in FIGS. 2B-2C). In this illustrative configuration, the axial load member 222 is illustrated as a spring, although other types of constant load application mechanisms may be employed without departing from the scope of the present invention. For example, and without limitation, hydraulic pressure may be used to bias or otherwise load the outer race member with a known axial force. The axial load member 222 may be secured in place, relative to the housing 208, via a backing plate 224 which may be attached to the housing 208 by a fastener 226. It will be appreciated that other stop and fixing mechanisms and assemblies may be used to support the axial load member 222, without departing from the scope of the present invention.

A bearing cage 228 is arranged about the rolling elements 216. The bearing cage 228 may be configured as a circular strip or plate of material with a set of holes, apertures, openings, recesses, or the like. Each hole of the bearing cage 228 may correspond to a respective rolling element 216 or house/contain a respective rolling element 216. Accordingly, as the rolling elements 216 rotate within the races 218, 220 about a shaft axis 230, the bearing cage 228 will be rotated at the same rate of rotation about the axis 230 of the shaft 202. Arranged relative to the bearing cage 228 is a rotational velocity sensor 232. The rotational velocity sensor 232 is arranged to monitor or otherwise detect a rotational velocity of the bearing cage 228. In accordance with some non-limiting embodiments, the rotational velocity sensor 232 may be configured as an optical sensor or other light-based sensor that detects a marking, indicator, or the like on the bearing cage 228. In other configurations, the rotational velocity sensor 232 may be a mechanical mechanism, such as an encoder disk, wheel, or the like, that is rotated in response to rotation of the bearing cage 228. In still further configurations, the rotational velocity sensor 232 may be a magnetic or electromagnetic assembly. The above are merely examples of potential implementations of the rotational velocity sensor 232, and those of skill in the art will appreciate that other types of the rotational velocity sensors and detectors may be employed with embodiments of the present invention without departing from the scope thereof.

In operation of the gear assembly 200, the housings 208, 210, the rotational velocity sensor 232, the axial load member 222, and the outer bearing raceway 220 are stationary. Furthermore, during operation, the shaft 202 and associated gears 204, 206, the inner bearing raceway 218, the rolling elements 216, and the bearing cage 228 are rotated. The axial load member 222 is configured to apply a constant axial force to the outer bearing raceway 220.

During operation of the configuration shown in FIG. 2A, the shaft 202 transfers torque through the gears 204, 206. The loaded gears 204, 206 generate a radial force directly proportional to the transferred torque. The radial force is relative to the shaft axis 230. An increase in torque leads to an increase in radial force. A change in radial force at the gears 204, 206 results in a change in radial position of the shaft 202 and the inner bearing raceway 218 relative to the stationary housing 208 and other stationary parts. Such a change results in an alteration of a radial-to-axial force ratio and subsequently changes a contact angle α of a contact point of the rolling element 216 relative to the inner bearing raceway 218. FIG. 2B illustrates a contact angle α₁ defined between a low torque outer raceway contact point 234 of the rolling element 216 with the outer bearing raceway 220 relative to a line normal to the shaft axis 230. FIG. 2C illustrates a contact angle α₂ defined between a high torque contact point 236 of the rolling element 216 with the outer bearing raceway 220 relative to the line normal to the shaft axis 230.

As illustrated, as the torque is increased (FIG. 2B is example of low torque and FIG. 2C is example of high torque), the radial forces will be increased. For example, as shown in FIG. 2B, a low torque radial force F_{R1} is illustrated which results in a relatively large contact angle α₁, relative to a line normal to the shaft axis 230 for the low torque contact point 234. The rolling element 216 will travel about the inner bearing raceway 218 at a low torque diameter Ø₁. The low torque diameter Ø₁ is defined as a path that a low torque inner raceway contact point 238 follows along the inner bearing raceway 218. It will be appreciated that the low torque inner raceway contact point 238 will be offset from the vertical by the same contact angle (α₁) as the low torque outer raceway contact point 234.

Referring to FIG. 2C, a high torque radial force F_{R2} is illustrated which results in a relatively small contact angle α₂, relative to a line normal to the shaft axis 230 for the high torque contact point 236. The rolling element 216 will travel about the inner bearing raceway 218 at a high torque diameter Ø₂. The high torque diameter Ø₂ is defined as a path that a high torque inner raceway contact point 240 follows along the inner bearing raceway 218. It will be appreciated that the high torque inner raceway contact point 204 will be offset from the vertical by the same contact angle (α₂) as the high torque outer raceway contact point 236.

As illustrated in FIGS. 2B-2C, the decrease of the contact angle α of the rolling element 216 leads to the rolling element 216 rolling over a smaller diameter (Ø₁ > Ø₂). A lower running diameter Ø results in a decrease in the circulating speed of the rolling element 216. Because the rolling elements 216 are arranged within the bearing cage 228, the rolling elements 216 will push or otherwise drive rotation of the bearing cage 228. Accordingly, a lower rolling element circulating speed results in a proportionally lower baring cage rotational speed. By measuring the rotational speed of the bearing cage 228, the transferred torque can be determined, as described herein.

The measurement of the rotational speed of the bearing cage 228 may be performed using a controller 242 that is in operable communication with the rotational velocity sensor 232. The rotational velocity sensor 232 may obtain a rotational velocity using one or more techniques, such as optical sensing, magnetic sensing, electromagnetic sensing, mechanical sensing, or the like, as will be appreciated by those of skill in the art. In some configurations, the controller 242 may be an intermediate component that processes signals received from the rotational velocity sensor 232. The processed signal may be then transmitted or processed in a further downstream processing systems, such as an engine controller, full authority digital engine control (FADEC), or the like. In other configurations, the controller 242 may be representative of an engine controller or FADEC. In still other configurations, the controller 242 may be a dedicated controller that both receives signals from the rotational velocity sensor 232 and processes the same. It will be appreciated that other control and processing configurations may be used without departing from the scope of the present invention. The controller 242, or other processing device/system, may be configured to perform the below described calculations to calculate a torque associated with the gear assembly 200.

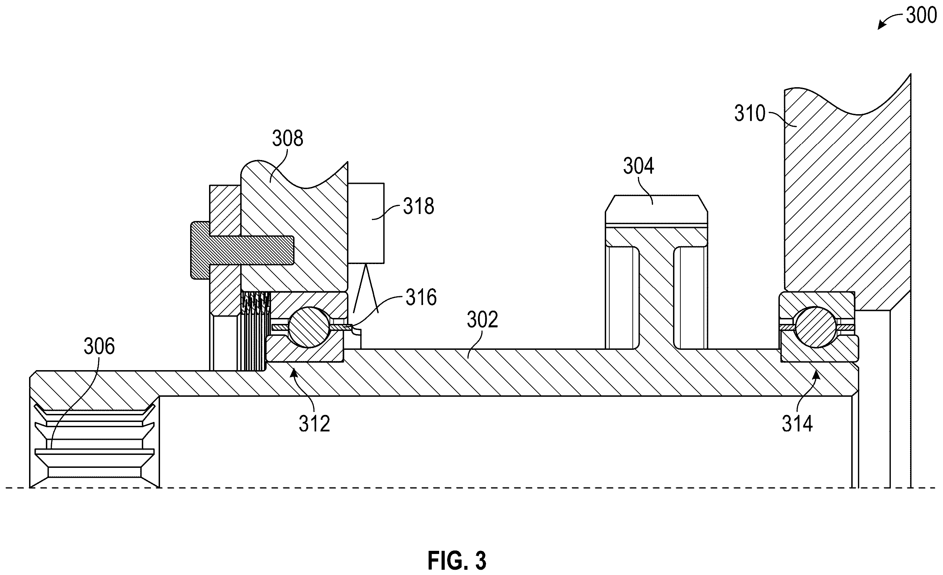

FIGS. 2A-2C illustrate a spur gear mesh configuration, and with two spur gear 204, 206. Embodiments of the present invention may also be used for systems having a single spur gear and a spline. For example, referring now to FIG. 3, a schematic illustration of a portion of a gear assembly 300 incorporating an embodiment of the present invention is shown. The gear assembly 300 may be part of an aircraft propulsion system or other aircraft system that includes a shaft 302 to for receiving and/or transmitting torque from or to a gear set that includes, in this illustrative configuration, a gear 304 and a spline 306. The shaft 302 is rotationally mounted relative to a first housing 308 and a second housing 310. The shaft 302 is supported on a first bearing assembly 312 at one end and a second bearing assembly 314 at an opposite end of the shaft 302. The bearing assemblies 312, 314 may be configured substantially similar to that shown and described above, including a bearing cage 316. Rotation of the bearing cage 316 may be detected using a rotational velocity sensor 318, similar to that shown and described above. Similar to the embodiment described above, a transferred torque may be obtained from measuring a rotational velocity of the bearing cage 316.

In accordance with embodiments of the present invention, the transferred torque of a spur gear configuration (*Tₛₚᵤᵣ*), such as shown in FIGS. 2A-2C and 3, may be obtained using the following relationships: $C = tan \left({cos}^{- 1}\left(\frac{\frac{- 2 {ω}_{cage}}{{{ω}_{shaft}}^{+ 1}}}{\frac{{d}_{ball}}{{PD}_{bearing}}}\right)\right)$ ${T}_{spur} = \frac{\left(C⋅\frac{{F}_{AX}}{tan \left({α}_{gear}\right)}\right) ⋅ {PD}_{gear}}{2}$

In relationships (1) and (2), C is a variable that defines the proportional relationship between the rotational speed of the bearing cage and the shaft, the bearing pitch diameter, and the ball diameter, *ω_{cage}* is the rotational velocity of the bearing cage (e.g., bearing cage 228), *ω_{shaft}* is the rotational velocity of the shaft (e.g., shaft *202), PD_{bearing}* is the pitch diameter of the rolling element (e.g., rolling element 216), *d_{ball}* is the diameter of the rolling element (e.g., rolling element 216), *PD_{gear}* is the gear pitch diameter, *α_{gear}* is a gear pressure angle, and *F_{AX}* is the constant axial force from the axial load member (e.g., axial load member 222). The pitch diameter of the rolling elements and the gear, the diameter of the rolling elements, the gear pressure angle, and the axial force are all fixed and known quantities (e.g., design inputs). The rotational velocity of the cage is what is measured, and the rotational velocity of the shaft may be measured or may be a known input value, such as from a controller or the like (e.g., controller 242). As such, the primary unknown quantity is the rotational velocity of the cage *ω_{cage}.* In accordance with embodiments of the present invention, the rotational velocity of the cage *ω_{cage}* is measured, and then used to determine or calculate the transferred torque, via implementation of relationships (1) and (2) (e.g., by controller 242).

In accordance with an example of the present invention, torque is transferred through the gear mesh (e.g., gears 204, 206) and generates radial force related to a pressure angle. By preloading the rolling element (e.g., rolling element 216) with a constant axial force (e.g., F_{AX} applied by axial load member 222), the bearing ball operates at a specific bearing contact angle (α). When an additional radial force (related to torque) is generated from the gear mesh, the resultant force acting on the bearing ball changes the ratio of axial-to-radial force, which affects the contact angle α of the rolling element. This causes the bearing ball to change the diameter at which it rotates, thereby affecting the angular velocity (*ω_{cage}*) of the bearing cage (e.g., bearing cage 228). By measuring changes in the angular velocity of the bearing cage, the torque value can be evaluated, as detailed in, for example, relationships (1) and (2). In accordance with some embodiments, additional precision of the measurement of the torque may be achieved via comparing the bearing cage measurement with other sources of shaft angular velocity measurements, which may compensate for fluctuation factors.

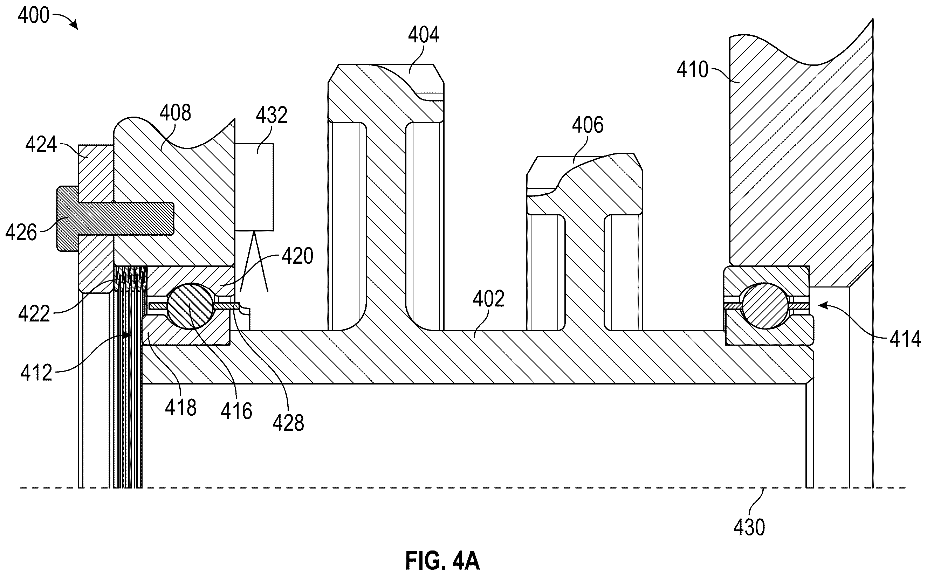

Embodiments of the present invention may also be applicable to gear systems that use helical gears, either as a two gear configuration (e.g., similar to FIGS. 2A-2C) or as a gear and spline configuration (e.g., similar to FIG. 3). For example, referring now to FIGS. 4A-4C, schematic illustrations of a portion of a gear assembly 400 incorporating an embodiment of the present invention are shown. The gear assembly 400 may be part of an aircraft propulsion system or other aircraft system that includes a shaft 402 to for receiving and/or transmitting torque from or to a gear set that includes, in this illustrative configuration, a first gear 404 and a second gear 406. In this configuration, the gears 404, 406 are configured as helical gears. The shaft 402 is rotationally mounted relative to a first housing 408 and a second housing 410. The shaft 402 is supported on a first bearing assembly 412 at one end and a second bearing assembly 414 at an opposite end of the shaft 402. It will be appreciated that other arrangements and number of bearing assemblies may be used without departing from the scope of the present invention.

Each bearing assembly 412, 414 includes an assembly of components, similar to that shown and described above. For example, the gearing assemblies include a set of rolling elements 416 arranged between an inner bearing raceway 418 and an outer bearing raceway 420, as described above. An axial load member 422 is arranged relative to the outer bearing raceway 420, as described above, and applies a constant, known axial force F_{AX} on the outer bearing raceway 420. The axial load member 422 may be secured in place, relative to the housing 408, via a backing plate 424 which may be attached to the housing 408 by a fastener 426. A bearing cage 428 is arranged about the rolling elements 416. Arranged relative to the bearing cage 428 is a rotational velocity sensor 432 and configured to determine or detect a rotational velocity of the bearing cage 428 as it rotates about a shaft axis 430.

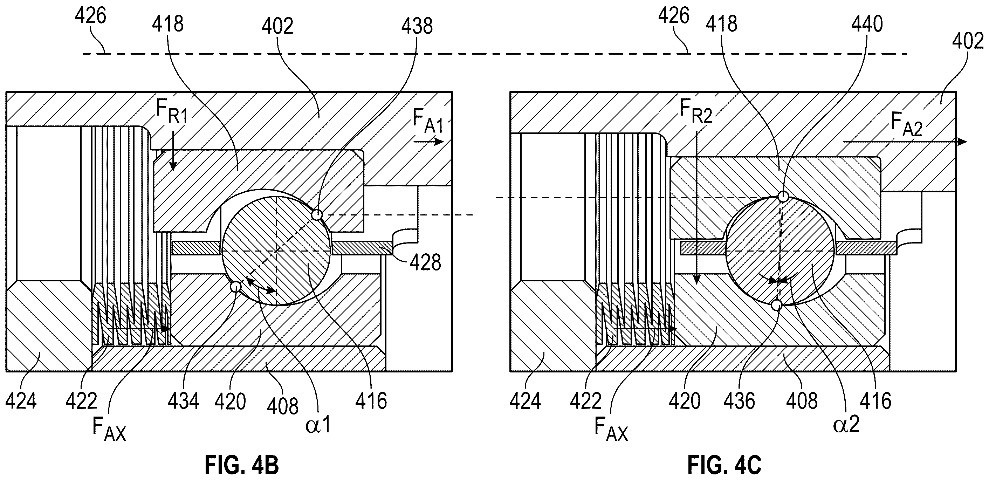

During operation of the gear assembly 400, the shaft 402 transfers torque through the gears 404, 406. The loaded gears 404, 406, configured as helical gears, generate both radial forces and axial forces proportional to the transferred torque. The radial (normal) and axial (parallel) forces are relative to the shaft axis 430. An increase in torque leads to an increase in both radial and axial forces. A change in the forces at the gears 404, 406 results in a change in position of the shaft 402 and the inner bearing raceway 418 relative to the stationary housing 408 and other stationary parts, in both radial and axial positions. Such a change results in an alteration of a radial-to-axial force ratio and subsequently changes a contact angle α of contact points of the rolling element 416 relative to the inner bearing raceway 418, similar to that described above. FIG. 4B illustrates a contact angle α₁ defined between a low torque outer raceway contact point 434 of the rolling element 416 with the outer bearing raceway 420 relative to a line normal to the shaft axis 430. FIG. 4C illustrates a contact angle α₂ defined between a high torque contact point 436 of the rolling element 416 with the outer bearing raceway 420 relative to the line normal to the shaft axis 430.

Similar to the above described configuration, as the torque is increased (FIG. 4B is example of low torque and FIG. 4C is example of high torque), the radial forces will be increased (e.g., F_{R1} < F_{R2}). Furthermore, because the gear assembly 400 employed helical gears, the axial forces will also increase (e.g., F_{A1} < F_{A2}). The low torque radial and axial forces F_{R1}, F_{A1} (FIG. 4B) result in a relatively large contact angle α₁, whereas the high torque radial and axial forces F_{R2}, F_{A2} (FIG. 4C) result in a relatively small contact angle α₂. Similar to the above described configurations, the decrease of the contact angle α of the rolling element 416 leads to the rolling element 416 rolling over a smaller diameter (e.g., Ø₁ > Ø₂ as shown in FIGS. 2B-2C). A lower running diameter results in a decrease in the circulating speed of the rolling element 416 and the bearing cage 428. Accordingly, a lower rolling element circulating speed results in a proportionally lower baring cage rotational speed. By measuring the rotational speed of the bearing cage 428, the transferred torque can be determined, as described herein.

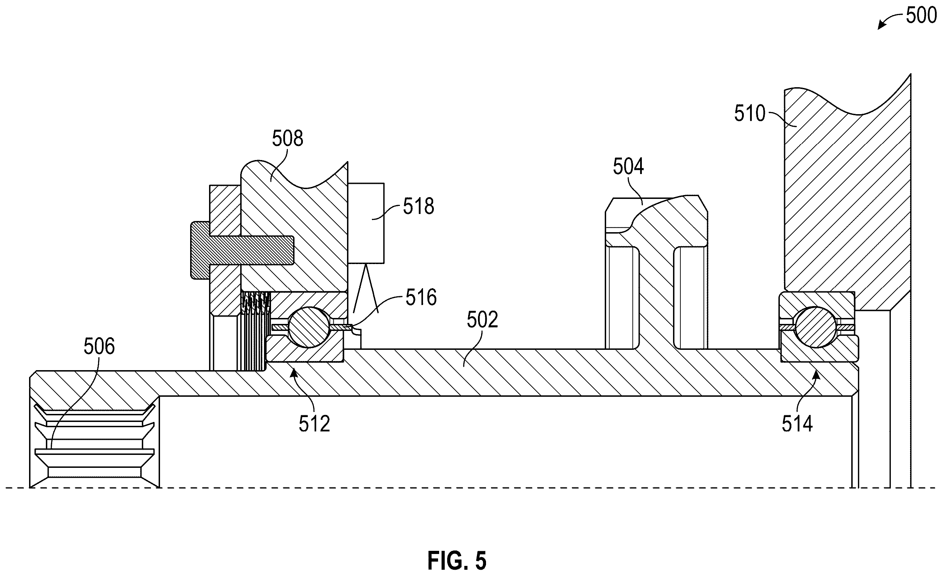

Embodiments of the present invention may also be used for systems having a single helical gear and a spline. For example, referring now to FIG. 5, a schematic illustration of a portion of a gear assembly 500 incorporating an embodiment of the present invention is shown. The gear assembly 500 may be part of an aircraft propulsion system or other aircraft system that includes a shaft 502 to for receiving and/or transmitting torque from or to a gear set that includes, in this illustrative configuration, a gear 504 and a spline 506. The shaft 502 is rotationally mounted relative to a first housing 508 and a second housing 510 and is supported on a first bearing assembly 512 at one end and a second bearing assembly 514 at an opposite end. The bearing assemblies 512, 514 may be configured substantially similar to that shown and described above, including a bearing cage 516. Rotation of the bearing cage 516 may be detected using a rotational velocity sensor 518, similar to that shown and described above. Similar to the embodiment described above, a transferred torque may be obtained from measuring a rotational velocity of the bearing cage 516.

In accordance with embodiments of the present invention, the transferred torque of a helical gear configuration (*T_{helical}*), such as shown in FIGS. 4A-4C and 5, may be obtained using the following relationships: $C = tan \left({cos}^{- 1}\left(\frac{\frac{- 2 {ω}_{cage}}{{ω}_{shaft}} + 1}{\frac{{d}_{ball}}{{PD}_{bearing}}}\right)\right)$ ${T}_{helical} = \frac{\left(\frac{1}{\left[1+C⋅\frac{tan \left({β}_{gear}\right)}{tan \left({α}_{gear}\right)}\right] / \left(C⋅{F}_{AX}\right)}\right)}{tan \left({α}_{gear}\right)} ⋅ \frac{{PD}_{gear}}{2}$

In relationships (3) and (4), C is a variable that defines the proportional relationship between the rotational speed of the bearing cage and the shaft, the bearing pitch diameter, and the ball diameter, *ω_{cage}* is the rotational velocity of the bearing cage (e.g., bearing cage 428), *ω_{shaft}* is the rotational velocity of the shaft (e.g., shaft *402), PD_{bearing}* is the pitch diameter of the rolling element (e.g., rolling element 416), *d_{ball}* is the diameter of the rolling element (e.g., rolling element 416), *PD_{gear}* is the gear pitch diameter, *α_{gear}* is a gear pressure angle, *β_{gear}* is a gear helix angle, and *F_{AX}* is the constant axial force from the axial load member (e.g., axial load member 422). The pitch diameter of the rolling elements and the gear, the diameter of the rolling elements, the gear pressure angle and gear helix angle, and the axial force are all fixed and known quantities (e.g., design inputs). The rotational velocity of the cage is what is measured, and the rotational velocity of the shaft may be measured or may be a known input value, such as from a controller or the like. As such, the primary unknown quantity is the rotational velocity of the cage *ω_{cage}.* In accordance with embodiments of the present invention, the rotational velocity of the cage *ω_{cage}* is measured, and then used to determine the transferred torque, via implementation of relationships (3) and (4).

In configurations that employ helical gearing systems, torque transferred through the gear mesh generates radial and axial forces related to a pressure angle and a helix angle. By preloading the bearing with a constant axial force, such as via an axial load member, the rolling element will operate at a specific bearing contact angle α. When an additional radial and axial force is generated from the gear mesh (related to torque), the resultant force acting on the rolling element changes the ratio of axial-to-radial force, which affects the contact angle α of the rolling element. This causes the rolling element to change the diameter at which it rotates, thereby affecting the angular velocity of the bearing cage (*ω_{cage}*). By utilizing the axial force from helical gear, bearing preload can be counteracted, allowing for a bearing contact angle approaching almost 0°, which significantly expands the measurable indication range. By measuring the changes in the angular velocity of the bearing cage, the torque value can be evaluated, as described above, such as using relationships (3) and (4).

Advantageously, embodiments of the present invention are directed to measuring a torque of a shaft and/or gear assembly within a propulsion system of an aircraft. Embodiments of the present invention provide for improved systems as compared to conventional torque monitoring systems, in part, due to fewer components and complexity, and relying upon existing mechanisms of operation (e.g., axial and radial forces applied to the gears/shaft during operation). That is, in accordance with embodiments of the present invention, no additional parts are required beyond the bearings and gear shafts already present in a typical gearbox and a rotational velocity sensor arranged to detect a rotational velocity of a bearing cage. Accordingly, advantageously, embodiments of the present invention may be simplified compared to conventional systems, thus enabling significant reductions in components, mass, and size.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present invention has been described in detail in connection with only a limited number of embodiments, it should be readily understood that the present invention is not limited to such disclosed embodiments. Rather, the present invention can be modified to incorporate any number of variations, alterations, substitutions, combinations, sub-combinations, or equivalent arrangements not heretofore described, but which are commensurate with the scope of the present invention. Additionally, while various embodiments of the present invention have been described, it is to be understood that aspects of the present invention may include only some of the described embodiments.

## Claims

1. A torque measurement system of an aircraft propulsion system (20), comprising:
a gear assembly (200) comprising:
a shaft (202) configured to be rotated within a housing (208); and
a bearing assembly (212) configured to rotationally support the shaft (202) within the housing (208), wherein the bearing assembly (212) comprises:
an inner bearing raceway (218) arranged on the shaft (202);
an outer bearing raceway (220) arranged on the housing (208);
a rolling element (216) arranged between the inner bearing raceway (218) and the outer bearing raceway (220), wherein the rolling element (216) is configured to travel along a path defined between the inner bearing raceway (218) and the outer bearing raceway (220); and
a bearing cage (228) arranged between the inner bearing raceway (218) and the outer bearing raceway (220), wherein the rolling element (216) is configured drive rotational movement of the bearing cage (228);
an axial load member (222) arranged to apply an axial load to the outer bearing raceway (220);
a rotational velocity sensor (232) configured to measure a rotational velocity of the bearing cage (228); and
a controller (242) configured to calculate a transferred toque of the gear assembly (200) based on a detected rotational velocity of the bearing cage (228).

2. The torque measurement system of claim 1, wherein the rotational velocity sensor (232) is one of an optical sensor, a magnetic sensor, an electromechanical sensor, an electrical sensor, or a mechanical sensor.

3. The torque measurement system of claim 1 or 2, wherein the rotational velocity sensor (232) is mounted to the housing (208).

4. The torque measurement system of any preceding claim, wherein the housing (208) is a first housing (208) and the bearing assembly (212) is a first bearing assembly (212) the system further comprising a second housing (210) and a second bearing assembly (214) configured to support the shaft (202) on the second housing (210) at an end of the shaft (202) opposite the first bearing assembly (212).

5. The torque measurement system of any preceding claim, wherein:
the gear assembly (200) comprises at least two spur gears (204, 206) that extend radially from the shaft (202); and/or
the gear assembly (300) comprises a spur gear (304) extending radially from the shaft (302) and a spline (306) arranged axially with the shaft (302).

6. The torque measurement system of any of claims 1 to 4, wherein:
the gear assembly (400; 500) comprises at least two helical gears (404; 504) that extend radially from the shaft (402; 502); and/or
the gear assembly (500) comprises a helical gear (504) extending radially from the shaft (502) and a spline (506) arranged axially with the shaft (502).

7. The torque measurement system of any of claims 1 to 5, wherein:
the gear assembly (200) comprises at least one spur gear (204, 206), and
the transferred torque is calculated using the following relationships: $C = tan \left({cos}^{- 1}\left(\frac{\frac{- 2 {ω}_{cage}}{{ω}_{shaft}} + 1}{\frac{{d}_{ball}}{{PD}_{bearing}}}\right)\right) ;$ and ${T}_{spur} = \frac{\left(C⋅\frac{{F}_{AX}}{tan \left({α}_{gear}\right)}\right) ⋅ {PD}_{gear}}{2} ,$
wherein C is a variable that defines the proportional relationship between the rotational speed of the bearing cage (228) and the shaft (202), the bearing pitch diameter, and the ball diameter, *ω_{cage}* is a rotational velocity of the bearing cage (228), *ω_{shaft}* is a rotational velocity of the shaft (202), *PD_{bearing}* is a pitch diameter of the rolling element (216), *d_{ball}* is a diameter of the rolling element (216), *PD_{gear}* is a gear pitch diameter of the at least one spur gear (204, 206), *α_{gear}* is a gear pressure angle, and *F_{AX}* is an axial force of the axial load member (222).

8. The torque measurement system of any of claims 1 to 4, and 6, wherein:
the gear assembly (400; 500) comprises at least one helical gear (404; 504), and
the transferred torque is calculated using the following relationships: $C = tan \left({cos}^{- 1}\left(\frac{\frac{- 2 {ω}_{cage}}{{ω}_{shaft}} + 1}{\frac{{d}_{ball}}{{PD}_{bearing}}}\right)\right) ;$ and ${T}_{helical} = \frac{\left(\frac{1}{\left[1+C⋅\frac{tan \left({β}_{gear}\right)}{tan \left({α}_{gear}\right)}\right] / \left(C⋅{F}_{AX}\right)}\right)}{tan \left({α}_{gear}\right)} ⋅ \frac{{PD}_{gear}}{2} ,$
wherein C is a variable that defines the proportional relationship between the rotational speed of the bearing cage (428; 516) and the shaft (402; 502), the bearing pitch diameter, and the ball diameter, *ω_{cage}* is a rotational velocity of the bearing cage (428; 516), *ω_{shaft}* is a rotational velocity of the shaft (402; 502), *PD_{bearing}* is a pitch diameter of the rolling element (416), *d_{ball}* is a diameter of the rolling element (416), *PD_{gear}* is a gear pitch diameter, *α_{gear}* is a gear pressure angle, *β_{gear}* is a gear helix angle, and *F_{AX}* is an axial force of the axial load member (422).

9. The torque measurement system of any preceding claim, wherein:
the axial load member (222) is biased against a stop (224); and/or
the axial load member (222) is a spring.

10. A method for monitoring torque on a gear shaft (202) of an aircraft propulsion system (20), the method comprising:
arranging a rolling element (216) and a bearing cage (228) between an inner bearing raceway (218) and an outer bearing raceway (220), wherein the inner bearing raceway (218) is arranged on the gear shaft (202) and the outer bearing raceway (220) is arranged on a housing (208) that supports the gear shaft (202);
applying an axial load to the outer bearing raceway (220) with an axial load member (222);
measuring a rotational speed of the bearing cage (228) with a rotational velocity sensor (232); and
calculating a transferred torque of the gear shaft (202) based on the measured rotational speed of the bearing cage (228).

11. The method of claim 10, wherein the gear shaft (202) is part of a gear assembly (200), wherein the gear assembly (200) comprises:
the gear shaft (202) that is configured to be rotated within a housing (208);
a bearing assembly (212) configured to rotationally support the gear shaft (202) within the housing (208), wherein the bearing assembly (212) comprises:
the inner bearing raceway (218);
the outer bearing raceway (220);
the rolling element (216) arranged between the inner bearing raceway (218) and the outer bearing raceway (220), wherein the rolling element (216) is configured to travel along a path defined between the inner bearing raceway (218) and the outer bearing raceway (220); and
the bearing cage (228), wherein the rolling element (216) is configured drive rotational movement of the bearing cage (228).

12. The method of claim 11, wherein:
the gear assembly (200) comprises at least one spur gear (204, 206), and
the transferred torque is calculated using the following relationships: $C = tan \left({cos}^{- 1}\left(\frac{\frac{- 2 {ω}_{cage}}{{ω}_{shaft}} + 1}{\frac{{d}_{ball}}{{PD}_{bearing}}}\right)\right) ;$ and ${T}_{spur} = \frac{\left(C⋅\frac{{F}_{AX}}{tan \left({α}_{gear}\right)}\right) ⋅ {PD}_{gear}}{2} ,$
wherein C is a variable that defines the proportional relationship between the rotational speed of the bearing cage (228) and the shaft (202), the bearing pitch diameter, and the ball diameter, *ω_{cage}* is a rotational velocity of the bearing cage (228), *ω_{shaft}* is a rotational velocity of the gear shaft (202), *PD_{bearing}* is a pitch diameter of the rolling element (216), *d_{ball}* is a diameter of the rolling element (216), *PD_{gear}* is a gear pitch diameter of the at least one spur gear (204), *α_{gear}* is a gear pressure angle, and *F_{AX}* is an axial force of the axial load member (222).

13. The method of claim 11, wherein:
the gear assembly (400; 500) comprises at least one helical gear (404; 504), and
the transferred torque is calculated using the following relationships: $C = tan \left({cos}^{- 1}\left(\frac{\frac{- 2 {ω}_{cage}}{{ω}_{shaft}} + 1}{\frac{{d}_{ball}}{{PD}_{bearing}}}\right)\right) ;$ and ${T}_{helical} = \frac{\left(\frac{1}{\left[1+C⋅\frac{tan \left({β}_{gear}\right)}{tan \left({α}_{gear}\right)}\right] / \left(C⋅{F}_{AX}\right)}\right)}{tan \left({α}_{gear}\right)} ⋅ \frac{{PD}_{gear}}{2} ,$
wherein C is a variable that defines the proportional relationship between the rotational speed of the bearing cage (428; 516) and the shaft (402; 502), the bearing pitch diameter, and the ball diameter, *ω_{cage}* is a rotational velocity of the bearing cage (428; 516), *ω_{shaft}* is a rotational velocity of the gear shaft (402; 502), *PD_{bearing}* is a pitch diameter of the rolling element (416), *d_{ball}* is a diameter of the rolling element *(416), PD_{gear}* is a gear pitch diameter, *α_{gear}* is a gear pressure angle, *β_{gear}* is a gear helix angle, and *F_{AX}* is an axial force of the axial load member (422).

14. The method of any of claims 10 to 13, further comprising:
providing at least two spur gears (204, 206) that extend radially from the gear shaft (202); and/or
providing a spur gear (304) extending radially from the gear shaft (302) and a spline (306) arranged axially with the gear shaft (302).

15. The method of any of claims 10 to 13, further comprising:
providing at least two helical gears (404; 504) that extend radially from the gear shaft (402; 502); and/or
providing a helical gear (504) extending radially from the gear shaft (502) and a spline (506) arranged axially with the gear shaft (502).
